# EUROPEAN PATENT APPLICATION

(11) **EP 4 606 858 A1**
(43) Date of publication of application: **27.08.2025**
(21) Application number: 24203494.0
(22) Date of filing: 30.09.2024
(51) Int. Cl.: C08L 63/00, C09D 163/00, C08G 59/40, C08G 59/50

(54) **DEVELOPMENT OF NOVEL AND COST-EFFECTIVE THERMAL INSULATING COATING TO MITIGATE CORROSION UNDER INSULATION**

(30) Priority: 21.02.2024 IN 202441012339
(71) Applicant: Hindustan Petroleum Corporation Limited, Bengaluru 560067 (IN)
(72) Inventor: M, Ajay Krishnan, 560022 Bangalore (IN); BASIK, Megha, 226006 Lucknow (IN); M S, Amrutha, 560067 Bengaluru (IN); RAVI, Balasubramaniam, 560067 Bengaluru (IN)
(74) Representative: Nederlandsch Octrooibureau

(57) **Abstract**

The present invention relates to a composition for mitigating corrosion under insulation, said composition comprising: (a) 20 wt.% to 60 wt.% of an epoxy resin; (b) 10 wt.% to 30 wt.% of a curing agent comprising a mixture of (b1) an aromatic compound selected from the following formula 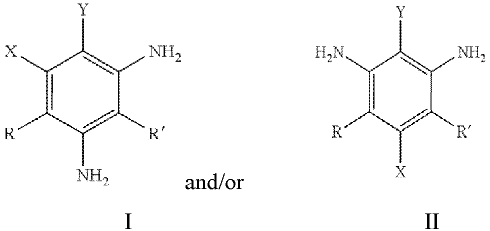 wherein,
Y is an alkyl group containing 1 to 4 carbon atoms,
X is hydrogen or an alkyl group containing 1 to 4 carbon atoms, and
R and R', independent of each other, are selected from alkyl group containing 1 to 4 carbon atoms, and alkylthio group containing 1 to 4 carbon atoms, and
(b2) an aliphatic compound;
(c) 1.0 wt.% to 15 wt.% of glass microspheres; (d) 10 wt.% to 40 wt.% of corrosion resistant fillers; (e) 0.1 wt.% to 1.0 wt.% of a fluorine-containing dispersant; and (f) 10 wt.% to 40 wt.% of a solvent, wherein the wt.% is based on the total weight of the composition. The present disclosure also relates to a process for preparing the composition for mitigating corrosion under insulation.

## Description

### FIELD OF INVENTION

The present disclosure relates to a composition for mitigating corrosion under insulation. The present disclosure also relates to a process for preparing the composition for mitigating corrosion under insulation.

### BACKGROUND OF THE INVENTION

Background description includes information that may be useful in understanding the present invention. It is not an admission that any of the information provided herein is prior art or relevant to the presently claimed invention, or that any publication specifically or implicitly referenced is prior art.

Corrosion under insulation (CUI) is a particular type of corrosion that can occur in insulated equipment (e.g., piping) due to ingress of water into the insulated layer and moisture build-up on the external surface of the insulated equipment. Insulated equipment that is exposed to mist and cooling water towers, as well as equipment that is exposed to steam vents can be especially vulnerable to the development of CUI. CUI is difficult to detect in its early stages as its precursor is merely the accumulation of moisture and water patches underneath the insulation layers, which is not visible from outside of the equipment. CUI that remains undetected can cause major damage to the equipment and, in severe cases, can even result in the closure of a process unit that features the damaged equipment.

Particularly for refineries that are located in the vicinity of a water body, CUI becomes a major issue. Challenges in mitigating CUI more often cause strain on preventive maintenance strategies and cost more than 20 percent of maintenance budgets of these refineries. Therefore, timely detection and mitigation of CUI is of prime importance. A number of solutions have been provided for detection of CUI, few of them have been summarized hereinbelow.

US10697935B2 discloses methods and systems for inspecting insulated equipment for CUI. Autonomous unmanned vehicle having aerial and ground locomotive capabilities with infrared detector for detecting inner surface of the equipment and eddy current sensor for inspecting the surface is discussed.

US20110205532A1 discloses an inspection method for inspecting CUI. A fiber optical Doppler sensor is used for inspecting the corrosion in piping.

Solutions for mitigating CUI by way of protective coatings have also been discussed in numerous literatures (both patent and non-patent). For instance, Fitzgerald et al. [J. Prot. Coat. Lining., 2005, 22 (4), 52-57] suggested the use of organic coatings up to around 100°C and other costly solutions like thermal spray aluminum and Al-foil wrapping for higher temperatures. For service temperature less than 175°C, a combination of primer and acrylic insulative coating has been proposed.

James et al. [James Reynolds Third Generation Polysiloxane Coatings for CUI Mitigation Paper No. 11415, NACE Corrosion Conference] discloses a polysiloxane coating resulting in a water-based (low VOC) single component, ambient curing polysiloxane thermal insulation coating. The coating is designed for ultra-high-build (UHB) over 20000 microns (800 mils).

CN114933838 discloses a two-component temperature-resistant anticorrosive coating. Component A primarily comprises a novolac epoxy resin, epoxy organic silicon resin, and flaky filler, whereas component B includes high functionality amine curing agent.

CN111909591B discloses another two-component anticorrosive heat-insulating coating. Component A comprises: 15-32 parts of mixed resin, 8-18 parts of toughening agent, 5-18 parts of reactive diluent, 0-16 parts of reactive flame retardant, 40-60 parts of functional filler and 1-5 parts of coupling agent. Component B comprises: 18-36 parts of curing agent, 5-15 parts of curing accelerator, 38-56 parts of functional filler and 1-9 parts of coupling agent.

Despite the developments in the state-of-the-art, the existing solutions are primarily aimed at detection and inspection of CUI. Further, the limited number of mitigation solutions available in the market are mostly ineffective in providing a long-term solution to CUI. These solutions are providing safety cage which is very costly and it is difficult to apply at some critical bent areas. The detection of CUI in these cages is another challenge as to check the structural condition we have to replace the full insulated cage.

In view of the aforementioned challenges, there is a need in the art for an improved composition for mitigating CUI, which alleviates, at least in part, one or more disadvantages or shortcomings of conventional formulations.

### OBJECTS OF THE INVENTION

The primary objective of the present invention is to provide a composition for mitigating corrosion under insulation, particularly for application areas having temperature upto 120°C.

Another objective of the present invention is to provide a composition having low thermal conductivity.

Still another object of the present invention is to provide a composition with enhanced corrosion protection and adhesion that requires least surface preparation/modification.

Yet another object of the present invention is to provide a process for preparing the composition for mitigating corrosion under insulation that is facile, economical and industrially applicable.

Still further object of the present invention is to provide a method for mitigating corrosion under insulation that enhances the life of the unprotected surface without compromising the mechanical properties.

### SUMMARY

This summary is provided to introduce a selection of concepts in a simplified form that are further described below in Detailed Description section. This summary is not intended to identify key features or essential features of the claimed subject matter, nor is it intended to be used as an aid in determining the scope of the claimed subject matter.

Accordingly, in one aspect, the present invention relates to a composition for mitigating corrosion under insulation. The composition comprises:
(a) 20 wt.% to 60 wt.% of an epoxy resin;
(b) 10 wt.% to 30 wt.% of a curing agent comprising a mixture of
   (b1) an aromatic compound selected from the following formula 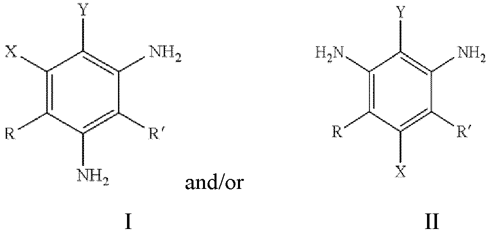 wherein,
      Y is an alkyl group containing 1 to 4 carbon atoms,
      X is hydrogen or an alkyl group containing 1 to 4 carbon atoms, and
      R and R', independent of each other, are selected from alkyl group containing 1 to 4 carbon atoms, and alkylthio group containing 1 to 4 carbon atoms, and
   (b2) an aliphatic compound;
(c) 1.0 wt.% to 15 wt.% of glass microspheres;
(d) 10 wt.% to 40 wt.% of corrosion resistant fillers;
(e) 0.1 wt.% to 1.0 wt.% of a fluorine-containing dispersant; and
(f) 10 wt.% to 40 wt.% of a solvent,
wherein the wt.% is based on the total weight of the composition.

In an embodiment, the epoxy resin has an epoxy equivalent weight (EEW) ranging between 150 gm/eq to 200 gm/eq, determined according to ASTM D1652.

In another embodiment, the aromatic compound is a compound of formula Ia

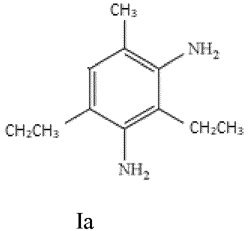

In still another embodiment, the aliphatic compound is selected from the group consisting of ethylene diamine, diethylene diamine, diethylene triamine, triethylene tetramine, propylene diamine, tetraethylene pentamine, hexaethylene heptamine, hexamethylene diamine, 2-methyl-1,5-pentamethylene diamine, and isophorone diamine.

In yet another embodiment, the glass microsphere has a Dᵥ₅₀ particle size ranging between 10 µm to 100 µm.

In a further embodiment, the corrosion resistant filler is selected form the group consisting of SiO₂, CaO, Ca₂SiO₄, CaCO₃, TiO₂, Na₂O, MnO₂, K₂O, Al₂O₃, Fe₂O₃, MgO, and combinations thereof.

In still another embodiment, the fluorine-containing dispersant is selected from the group consisting of perfluoroalkylethyl phosphates, perfluoroalkylethyl betaines, fluoroaliphatic amine oxides, fluoroaliphatic sodium sulfosuccinates, fluoroaliphatic stearate esters, fluoroaliphatic phosphate esters, fluoroaliphatic quaternaries, fluoroaliphatic polyoxyethylenes, fluoroalkyl sulfonate, and salts of fluoroalkyl sulfonate.

In yet another embodiment, the fluorine-containing dispersant is selected from the group consisting of fluoroalkyl sulfonate, alkali metal salt of fluoroalkyl sulfonate, and ammonium salt of fluoroalkyl sulfonate.

In another embodiment, the solvent is selected from polar solvent, hydrocarbon solvent, and mixtures thereof.

Another aspect of the present invention relates to a process for preparing the composition for mitigating corrosion under insulation comprising: i) taking 20 wt.% to 60 wt.% of an epoxy resin; ii) adding 10 wt.% to 40 wt.% of corrosion resistant fillers to the epoxy resin with stirring for a period in the range of 5 min to 60 min to obtain a first reaction mixture; iii) adding 0.1 wt.% to 1.0 wt.% of a fluorine-containing dispersant and 1.0 wt.% to 15 wt.% of glass microspheres in the first reaction mixture with stirring for a period in the range of 5 min to 60 min to obtain a second reaction mixture; iv) adding 10 wt.% to 40 wt.% of a solvent in the second reaction mixture to obtain a third reaction mixture; and v) adding 10 wt.% to 30 wt.% of a curing agent in the third reaction mixture with stirring for a period in the range of 5 min to 60 min to obtain a composition for mitigating corrosion under insulation.

Still another aspect of the present invention relates to a method for mitigating corrosion under insulation. The method comprises coating on an unprotected or metallic surface the above composition.

Yet another aspect of the present invention relates to the use of the above composition as an anticorrosive coating on an insulated surface.

Various objects, features, aspects and advantages of the present disclosure will become more apparent from the following detailed description of preferred embodiments, along with the accompanying drawing figures in which like numerals represent like features.

### BRIEF DESCRIPTION OF THE DRAWINGS

The accompanying drawing(s) are included to provide a further understanding of the present disclosure and are incorporated in and constitute a part of this specification. The drawings illustrate exemplary embodiments of the present disclosure and, together with the description, serve to explain the principles of the present disclosure. The diagrams are for illustration only, which thus is not a limitation of the present disclosure.
Figure 1 illustrates Bode Plot of different formulations and HP-TIC.
Figure 2 illustrates Adhesion Strength of different formulations and HP-TIC.
Figure 3 illustrates Adhesion Strength of HP-TIC and Others fillers in HP-TIC with top coat.

### DETAILED DESCRIPTION OF THE INVENTION

The following is a detailed description of embodiments of the disclosure. The embodiments are in such detail as to clearly communicate the disclosure. However, the amount of detail offered is not intended to limit the anticipated variations of embodiments; on the contrary, the intention is to cover all modifications, equivalents, and alternatives falling within the spirit and scope of the present disclosure as defined by the appended claims.

All publications herein are incorporated by reference to the same extent as if each individual publication or patent application were specifically and individually indicated to be incorporated by reference. Where a definition or use of a term in an incorporated reference is inconsistent or contrary to the definition of that term provided herein, the definition of that term provided herein applies and the definition of that term in the reference does not apply.

Reference throughout this specification to "one embodiment" or "an embodiment" means that a particular feature, structure or characteristic described in connection with the embodiment is included in at least one embodiment. Thus, the appearances of the phrases "in one embodiment" or "in an embodiment" in various places throughout this specification are not necessarily all referring to the same embodiment. Furthermore, the particular features, structures, or characteristics may be combined in any suitable manner in one or more embodiments.

In some embodiments, numbers have been used for quantifying weights, percentages, ratios, and so forth, to describe and claim certain embodiments of the invention and are to be understood as being modified in some instances by the term "about." Accordingly, in some embodiments, the numerical parameters set forth in the written description and attached claims are approximations that can vary depending upon the desired properties sought to be obtained by a particular embodiment. In some embodiments, the numerical parameters should be construed in light of the number of reported significant digits and by applying ordinary rounding techniques. Notwithstanding that the numerical ranges and parameters setting forth the broad scope of some embodiments of the invention are approximations, the numerical values set forth in the specific examples are reported as precisely as practicable.

The numerical values presented in some embodiments of the invention may contain certain errors necessarily resulting from the standard deviation found in their respective testing measurements.

Unless the context requires otherwise, throughout the specification which follows, the word "comprise" and variations thereof, such as "comprises" and "comprising" are to be construed in an open, inclusive sense that is as "including, but not limited to."

As used in the description herein and throughout the claims that follow, the meaning of "a," "an," and "the" includes plural reference unless the context clearly dictates otherwise. Also, as used in the description herein, the meaning of "in" includes "in" and "on" unless the context clearly dictates otherwise.

The recitation of ranges of values herein is merely intended to serve as a shorthand method of referring individually to each value falling within the range. Unless otherwise indicated herein, each individual value is incorporated into the specification as if it were individually recited herein. Furthermore, the ranges defined throughout the specification include the end values as well, i.e., a range of 1 to 10 implies that both 1 and 10 are included in the range. For the avoidance of doubt, the applicant shall be entitled to any equivalents according to applicable law.

All methods described herein can be performed in a suitable order unless otherwise indicated herein or otherwise clearly contradicted by context. The use of any and all examples or exemplary language (e.g., "such as") provided with respect to certain embodiments herein is intended merely to better illuminate the invention and does not pose a limitation on the scope of the invention otherwise claimed. No language in the specification should be construed as indicating any non-claimed element essential to the practice of the invention.

Groupings of alternative elements or embodiments of the invention disclosed herein are not to be construed as limitations. Each group member can be referred to and claimed individually or in any combination with other members of the group or other elements found herein. One or more members of a group can be included in, or deleted from, a group for reasons of convenience and/or patentability. When any such inclusion or deletion occurs, the specification is herein deemed to contain the group as modified.

The description that follows, and the embodiments described therein, is provided by way of illustration of an example, or examples, of particular embodiments of the principles and aspects of the present disclosure. These examples are provided for the purposes of explanation, and not of limitation, of those principles and of the disclosure.

It should also be appreciated that the present disclosure can be implemented in numerous ways, including as a system, a method or a device. In this specification, these implementations, or any other form that the invention may take, may be referred to as processes. In general, the order of the steps of the disclosed processes may be altered within the scope of the invention.

The headings and abstract of the invention provided herein are for convenience only and do not interpret the scope or meaning of the embodiments.

The following discussion provides many example embodiments of the inventive subject matter. Although each embodiment represents a single combination of inventive elements, the inventive subject matter is considered to include all possible combinations of the disclosed elements. Thus, if one embodiment comprises elements A, B, and C, and a second embodiment comprises elements B and D, then the inventive subject matter is also considered to include other remaining combinations of A, B, C, or D, even if not explicitly disclosed.

The term "or", as used herein, is generally employed in its sense including "and/or" unless the content clearly dictates otherwise.

Various terms are used herein to the extent a term used is not defined below, it should be given the broadest definition persons in the pertinent art have given that term as reflected in printed publications and issued patents at the time of filing.

In the present context, an "insulated surface" refers to any substrate or object that is encased, covered, or protected by an insulation system, regardless of the specific materials used in the construction of said insulation system. The term "insulation system" includes, but is not limited to, materials such as foams, fibers, coatings, jackets, wraps, tapes, claddings, or any combination thereof, intended to provide thermal, electrical, acoustic, or mechanical insulation. The insulation system may be applied directly to the surface of the substrate or through an intermediate layer or layers. The "insulated surface" encompasses the entirety of the protected substrate, including any exposed edges, joints, seams, penetrations, or other vulnerable areas that may be subject to the effects of corrosion.

Corrosion Under Insulation (CUI) poses significant challenges in various industrial sectors, leading to substantial economic losses, safety concerns, and operational disruptions. It is a complex and pervasive form of corrosion that occurs when moisture, aggressive chemicals, and varying temperatures become trapped beneath insulation systems, causing corrosion and subsequent deterioration of the underlying substrate. CUI represents a persistent threat across industries such as petrochemical, chemical processing, power generation, refineries, and offshore facilities, where insulation is commonly employed to maintain temperature, conserve energy, and ensure process efficiency.

The insidious nature of CUI lies in its ability to remain hidden from visual inspection, progressing silently beneath seemingly protective insulation layers. This concealed corrosion can compromise the structural integrity of equipment, pipelines, vessels, and other critical components, leading to leaks, failures, and costly repairs. The detrimental consequences of CUI include reduced operational lifespan, increased maintenance requirements, elevated safety risks, and environmental hazards.

To mitigate these issues, it was envisaged to develop novel and cost-effective coating composition which finds application in areas having temperature up to 120°C. Accordingly, an aspect of the present disclosure relates to a composition for mitigating corrosion under insulation.

An embodiment of the present disclosure provides a composition for mitigating corrosion under insulation, said composition comprising:
(a) 20 wt.% to 60 wt.% of an epoxy resin;
(b) 10 wt.% to 30 wt.% of a curing agent comprising a mixture of
   (b1) an aromatic compound selected from the following formula 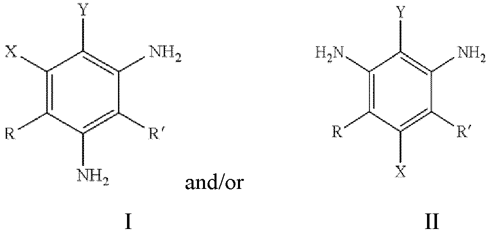 wherein,
      Y is an alkyl group containing 1 to 4 carbon atoms,
      X is hydrogen or an alkyl group containing 1 to 4 carbon atoms, and
      R and R', independent of each other, are selected from alkyl group containing 1 to 4 carbon atoms, and alkylthio group containing 1 to 4 carbon atoms, and
   (b2) an aliphatic compound;
(c) 1.0 wt.% to 15 wt.% of glass microspheres;
(d) 10 wt.% to 40 wt.% of corrosion resistant fillers;
(e) 0.1 wt.% to 1.0 wt.% of a fluorine-containing dispersant; and
(f) 10 wt.% to 40 wt.% of a solvent,
wherein the wt.% is based on the total weight of the composition.

In an embodiment, the epoxy resin has an epoxy equivalent weight (EEW) ranging between 150 gm/eq to 200 gm/eq, determined according to ASTM D1652. In another embodiment, the EEW ranges between 150 gm/eq to 190 gm/eq, or 150 gm/eq to 180 gm/eq, or 160 gm/eq to 180 gm/eq.

Novolac epoxy resin is one such epoxy resin which meets the aforementioned EEW range. Novolac epoxy resin is interchangeably known as epoxy phenol novolac (EPN) or phenol novolac resin. In EPN, the epoxide functional group is attached to the phenolic oxygen of the phenolic novolac. As such, each phenol oxygen of the novolac resin is attached with a -CH₂-(C₂H₃O) group, where - (C₂H₃O) is a three-membered epoxide ring. A single EPN polymer contains many epoxide groups, making the molecule multifunctional.

Typically, the phenol novolac resin is obtained through a two-step process that involves the reaction of a phenolic novolac resin with epichlorohydrin. These methods are well known to a person skilled in the art and therefore, the present invention is not limited by the same. Commercially available EPNs can also be used in the present invention.

In an embodiment, the epoxy resin is present in the composition in an amount ranging between 20 wt.% to 60 wt.%, or 25 wt.% to 60 wt.%, or 30 wt.% to 60 wt.%. In another embodiment, the amount of epoxy resin ranges between 35 wt.% to 60 wt.%, or 40 wt.% to 60 wt.%, or 45 wt.% to 60 wt.%.

Accordingly, in an embodiment, the composition comprises:
(a) 40 wt.% to 60 wt.% of epoxy phenol novolac resin having EEW ranging between 160 gm/eq to 180 gm/eq, determined according to ASTM D1652;
(b) 10 wt.% to 30 wt.% of a curing agent comprising a mixture of
   (b1) aromatic compound selected from the following formula 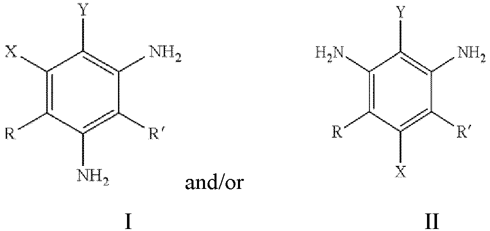 wherein,
      Y is an alkyl group containing 1 to 4 carbon atoms,
      X is hydrogen or an alkyl group containing 1 to 4 carbon atoms, and
      R and R', independent of each other, are selected from alkyl group containing 1 to 4 carbon atoms, and alkylthio group containing 1 to 4 carbon atoms, and
   (b2) aliphatic compound;
(c) 1.0 wt.% to 15 wt.% of glass microspheres;
(d) 10 wt.% to 40 wt.% of corrosion resistant fillers;
(e) 0.1 wt.% to 1.0 wt.% of fluorine-containing dispersant; and
(f) 10 wt.% to 40 wt.% of solvent.

The composition also comprises curing agents for crosslinking the aforementioned epoxy resin. In the present context, the curing agent is a mixture of aromatic curing agent/compound represented by formula I and/or II with aliphatic curing agent/compound.

In an embodiment, the curing agent is a mixture comprising the aromatic compound of formula I comprising 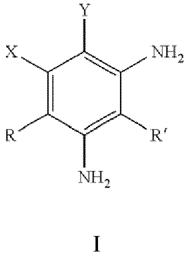 wherein,
Y is an alkyl group containing 1 to 4 carbon atoms,
X is hydrogen or an alkyl group containing 1 to 4 carbon atoms, and
R and R', independent of each other, are selected from alkyl group containing 1 to 4 carbon atoms, and alkylthio group containing 1 to 4 carbon atoms, and aliphatic compound.

In an embodiment, the curing agent is a mixture comprising the aromatic compound of formula I and aliphatic compound. Herein, Y is methyl, X is hydrogen, and both R and R' are same, i.e., -CH₂CH₃. Such aromatic compound is represented by formula Ia:

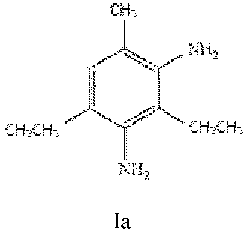

In another embodiment, the aliphatic compounds are selected from the group consisting of ethylene diamine, diethylene diamine, diethylene triamine, triethylene tetramine, propylene diamine, tetraethylene pentamine, hexaethylene heptamine, hexamethylene diamine, 2-methyl-1,5-pentamethylene diamine, isophorone diamine and combination thereof.

In another embodiment, the aliphatic compounds are selected from diethylene triamine, triethylene tetramine, propylene diamine, tetraethylene pentamine, hexaethylene heptamine, hexamethylene diamine, 2-methyl-1,5-pentamethylene diamine, and isophorone diamine.

In still another embodiment, the aliphatic compounds are selected from hexaethylene heptamine, hexamethylene diamine, 2-methyl-1,5-pentamethylene diamine, and isophorone diamine.

In a further embodiment, the aliphatic compound is isophorone diamine. Accordingly, in an embodiment, the curing agent is a mixture comprising the compound of formula Ia and isophorone diamine.

Suitable amounts of the curing agent range between 12 wt.% to 30 wt.%, or 12 wt.% to 25 wt.%, or 15 wt.% to 25 wt.%. In another embodiment, the curing agent is present in amounts ranging between 15 wt.% to 22 wt.%, or 15 wt.% to 20 wt.%.

Accordingly, in an embodiment the composition comprises:
(a) 20 wt.% to 60 wt.% of epoxy resin;
(b) 15 wt.% to 20 wt.% of curing agents comprising a mixture of
   (b1) aromatic compound of formula Ia 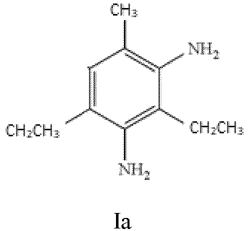 and
   (b2) isophorone diamine;
(c) 1.0 wt.% to 15 wt.% of glass microspheres;
(d) 10 wt.% to 40 wt.% of corrosion resistant fillers;
(e) 0.1 wt.% to 1.0 wt.% of fluorine-containing dispersant; and
(f) 10 wt.% to 40 wt.% of solvent.

The composition also includes glass microspheres. Herein, the term "glass microsphere" refers to a hollow or solid sphere composed primarily of glass material. The "glass microsphere" as defined herein may exhibit a range of particle sizes and morphologies, including but not limited to spherical, spherical with surface irregularities, or non-spherical shapes. The glass microspheres can be manufactured using various methods such as melt quenching, sol-gel processes, or spray drying. The present invention is not limited by the same.

In an embodiment, the glass microspheres have a Dᵥ₅₀ particle size ranging between 10 µm to 100 µm. The Dᵥ₅₀ particle size may be determined in accordance with 3M QCM 193.0. Suitable amount of these microspheres in the composition range between 1.0 wt.% to 15 wt.%, or 3.0 wt.% to 15 wt.%, or 5.0 wt.% to 15 wt.%. In another embodiment, the amount ranges between 7.0 wt.% to 15 wt.%, or 10 wt.% to 15 wt.%.

Accordingly, in an embodiment the composition comprises
(a) 20 wt.% to 60 wt.% of epoxy resin;
(b) 10 wt.% to 30 wt.% of curing agent comprising a mixture of
   (b1) an aromatic compound selected from the following formula 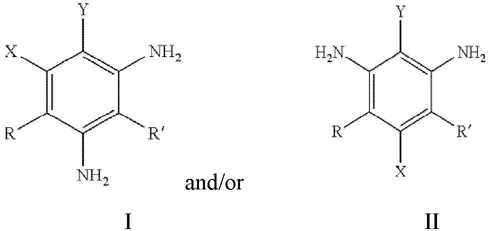 wherein,
      Y is an alkyl group containing 1 to 4 carbon atoms,
      X is hydrogen or an alkyl group containing 1 to 4 carbon atoms, and
      R and R', independent of each other, are selected from alkyl group containing 1 to 4 carbon atoms, and alkylthio group containing 1 to 4 carbon atoms, and
   (b2) an aliphatic compound;
(c) 7.0 wt.% to 15 wt.% of glass microspheres;
(d) 10 wt.% to 40 wt.% of corrosion resistant fillers;
(e) 0.1 wt.% to 1.0 wt.% of fluorine-containing dispersant; and
(f) 10 wt.% to 40 wt.% of solvent.

In an embodiment, the composition includes fillers, particularly corrosion resistant fillers. In another embodiment, the composition includes at least two fillers. Suitable fillers are selected from the group consisting of SiO₂, CaO, Ca₂SiO₄, CaCOs, TiO₂, Na₂O, MnO₂, K₂O, Al₂O₃, Fe₂O₃, MgO, and combinations thereof. In an embodiment, the fillers are selected from the group consisting of SiO₂, CaO, Ca₂SiO₄, CaCOs, TiO₂, Na₂O, MnO₂, K₂O, and combinations thereof. In another embodiment, the fillers are selected from the group consisting of SiO₂, Ca₂SiO₄, CaCOs, TiO₂, and combinations thereof. In still another embodiment, the filler is a mixture of Ca₂SiO₄, CaCO₃, and TiO₂.

Suitable amounts of the corrosion resistant fillers may be present in the composition. In an embodiment, the fillers are present in an amount ranging between 10 wt.% to 40 wt.%, or 15 wt.% to 40 wt.%, or 15 wt.% to 35 wt.%. In another embodiment, the fillers are present in an amount ranging between 15 wt.% to 30 wt.%, or 15 wt.% to 25 wt.%.

Accordingly, in an embodiment, the composition comprises
(a) 20 wt.% to 60 wt.% of epoxy resin;
(b) 10 wt.% to 30 wt.% of curing agent comprising a mixture of
   (b1) an aromatic compound selected from the following formula 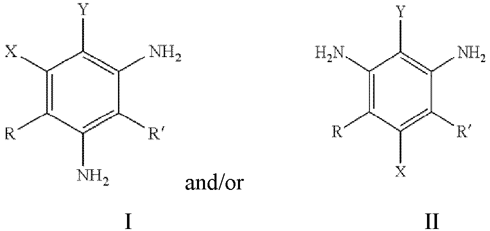 wherein,
      Y is an alkyl group containing 1 to 4 carbon atoms,
      X is hydrogen or an alkyl group containing 1 to 4 carbon atoms, and
      R and R', independent of each other, are selected from alkyl group containing 1 to 4 carbon atoms, and alkylthio group containing 1 to 4 carbon atoms, and
   (b2) an aliphatic compound;
(c) 1.0 wt.% to 15 wt.% of glass microspheres;
(d) 15 wt.% to 40 wt.% of corrosion resistant fillers comprising a mixture of Ca₂SiO₄, CaCO₃, and TiO₂;
(e) 0.1 wt.% to 1.0 wt.% of fluorine-containing dispersant; and
(f) 10 wt.% to 40 wt.% of solvent.

In another embodiment, the composition also includes dispersant, preferably fluorine-containing dispersant. Herein, the term "fluorine-containing dispersant" refers to a chemical compound or composition that possesses dispersant properties and incorporates fluorine atoms within its molecular structure. The fluorine-containing dispersant is specifically designed and formulated to enhance the dispersion and stability of particles within the composition. The "fluorine-containing dispersant" as defined herein may consist of a single compound or a combination of multiple compounds, and may include organic or inorganic components. The dispersant functionality enables the uniform distribution and suspension of ingredients in the formulation, thereby improving the overall quality and performance of the composition. The term "fluorine-containing dispersant" as defined herein is intended to encompass various chemical compositions, derivatives, analogs, isomers, and mixtures thereof, as long as they exhibit dispersant properties and incorporate fluorine atoms within their molecular structure.

In an embodiment, the fluorine-containing dispersant is selected from the group consisting of perfluoroalkylethyl phosphates, perfluoroalkylethyl betaines, fluoroaliphatic amine oxides, fluoroaliphatic sodium sulfosuccinates, fluoroaliphatic stearate esters, fluoroaliphatic phosphate esters, fluoroaliphatic quaternaries, fluoroaliphatic polyoxyethylenes, fluoroalkyl sulfonate, and salts of fluoroalkyl sulfonate.

In another embodiment, the fluorine-containing dispersant is selected from the group consisting of fluoroalkyl sulfonate, alkali metal salt of fluoroalkyl sulfonate, and ammonium salt of fluoroalkyl sulfonate. In still another embodiment, the fluorine-containing dispersant is ammonium salt of fluoroalkyl sulfonate.

Suitable amounts of the fluorine-containing dispersant in the composition range between 0.1 wt.% to 0.9 wt.%, or 0.2 wt.% to 0.8 wt.%, or 0.3 wt.% to 0.8 wt.%. In another embodiment, the amount range between 0.4 wt.% to 0.8 wt.%.

Accordingly, in an embodiment, the composition comprises
(a) 20 wt.% to 60 wt.% of epoxy resin;
(b) 10 wt.% to 30 wt.% of curing agent comprising a mixture of
   (b1) an aromatic compound selected from the following formula 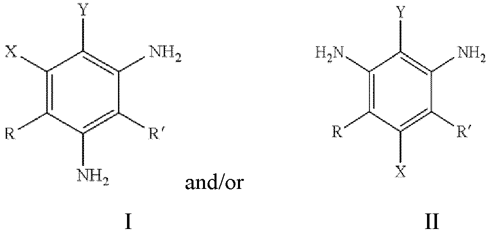 wherein,
      Y is an alkyl group containing 1 to 4 carbon atoms,
      X is hydrogen or an alkyl group containing 1 to 4 carbon atoms, and
      R and R', independent of each other, are selected from alkyl group containing 1 to 4 carbon atoms, and alkylthio group containing 1 to 4 carbon atoms, and
   (b2) an aliphatic compound;
(c) 1.0 wt.% to 15 wt.% of glass microspheres;
(d) 10 wt.% to 40 wt.% of corrosion resistant fillers;
(e) 0.4 wt.% to 0.8 wt.% of fluorine-containing dispersant selected from the group consisting of fluoroalkyl sulfonate, alkali metal salt of fluoroalkyl sulfonate, and ammonium salt of fluoroalkyl sulfonate; and
(f) 10 wt.% to 40 wt.% of solvent.

Suitable solvents in the present context include polar solvents, hydrocarbon solvents, and mixtures thereof. In an embodiment, the polar solvent is selected from the group consisting of acetone, methanol, ethanol, ethylacetate, butanol, isopropyl alcohol, methyl ethyl ketone, and mixtures thereof. In another embodiment, the hydrocarbon-based solvent is selected from a group consisting of kerosene, toluene, xylene, hexane, petroleum ether, heptane, and combinations thereof.

In an embodiment, the solvent is added in amounts ranging between 10 wt.% to 40 wt.% or 10 wt.% to 30 wt.%, or 10 wt.% to 25 wt.%. In another embodiment, the amount range between 15 wt.% to 25 wt.%.

Another aspect of the present disclosure relates to a process for preparing the composition, as described hereinabove. Accordingly, the embodiments described hereinabove in respect of the composition are applicable here as well.

In an embodiment, the composition is prepared by mixing the following ingredients: epoxy resin, curing agent, glass microspheres, corrosion resistant fillers, fluorine-containing dispersant, and solvent. The ingredients of the composition may be added in any sequence or manner to obtain the composition. The present invention is not limited by the same.

In another embodiment, the process for preparing the composition may include the following steps:
(A) mixing 20 wt.% to 60 wt.% of the epoxy resin with 10 wt.% to 40 wt.% of corrosion resistant fillers to obtain a first mixture;
(B) adding 0.1 wt.% to 1.0 wt.% of the fluorine-containing dispersant and 1.0 wt.% to 15 wt.% of glass microspheres to the reaction mixture; and
(C) stirring the reaction mixture of step (B) followed by addition of 10 wt.% to 40 wt.% of the solvent and 10 wt.% to 30 wt.% of the curing agent to obtain the composition.

In the present context, the term "mixing" refers to the process of combining the ingredients of the composition to achieve a homogenous or uniform mixture. The term "mixing" is used interchangeably with the term "stirring" in the context of this specification. Further, the "mixing" process as defined herein may involve the use of mixing equipment, such as mixers, blenders, agitators, or other similar apparatuses, which facilitate the efficient and effective blending or dispersion of the ingredients. These mixing techniques can be conducted under specific conditions, such as temperature, pressure, or time, as necessary for achieving the desired homogeneity and consistency of the mixture.

In an embodiment, a general synthesis for preparing 1 kg of the composition, 513.5 g of epoxy resin was taken in a beaker and stirred at ambient/room conditions (about 20-35 °C). 50 g of TiO₂ was then added and stirred for 5 minutes. Thereafter, 60 g of CaCO, was added and stirred for 5 minutes. Lastly, 80 g of Ca₂SiO₄ and stirred for another 10 minutes to finally obtain the reaction mixture. To this reaction mixture, 5 g of the fluorine-containing dispersant and 120 g of the glass microspheres were added followed by stirring for 10 minutes. Once the corrosion resistant fillers and glass microspheres were uniformly mixed and dispersed in the epoxy resin, solvent was added to get the desired consistency. Finally, 171.5 g of the curing agent was added and stirred and for 10 minutes to obtain the composition in accordance with the present invention.

Yet another aspect of the present disclosure relates to a method for mitigating CUI by coating the composition, as described hereinabove, on the metallic surface. Accordingly, the embodiments described hereinabove in respect of the composition and the process for preparing the composition is applicable here as well.

In an embodiment, the above composition is coated on the structural steel surface. For instance, the composition may be coated on an outer surface of the steel surface which is susceptible to CUI. Suitable application techniques for coating the composition on the metallic surface include, but are not limited to, brush/roller application, spray application, dip coating/immersion, electrostatic spray, powder coating, and trowel/spatula application. The present invention is not limited by the same.

In another embodiment, the coating is applied as a single-layer, or multi-layered on the metallic surface, and may optionally include addition layers of other ingredients as well.

Still another aspect of the present disclosure relates to the use of the composition, as described hereinabove, as an anticorrosive coating on the metallic surface. Accordingly, the embodiments described hereinabove in respect of the composition and the process for preparing the composition is applicable here as well.

The coating may be applied as a single-layer or multi-layer on the metallic surface, and may optionally include addition layers of other ingredients as well. Apart from providing thermal resistance to the metallic surface, the coating also provides resistance against chemical corrosion or degradation, barrier effect to penetration of moisture, gas and other substances, mechanical strength to the overall structure, and resistance to harsh weather conditions.

Additionally, the composition provides for the following advantages:
- Effective mitigating of CUI, particularly for application areas having temperature up to 120°C.
- Low thermal conductivity of the composition reduces heat transfer through the coating, thereby, providing for a more stable structure, reducing thermal cycling stress that might contribute to corrosion, and enhanced energy efficiency of the insulated surface.
- Due to the inventive selection of readily available ingredients, the metallic surface does not require any pre-treatment or modification before application of the composition. The composition does not employ any ingredient that might release harmful substances or volatile organic compounds (VOCs) during application, thereby ensuring worker safety as well as environmental protection.
- Once applied, the life of the coating is similar or in some cases more than the commercially available solutions for CUI.
- Since there is no requirement of specific techniques to prepare or apply, the composition is easy to use and economical.
- By applying the composition on the metallic surface, the overall life of the surface is enhanced without compromising its mechanical properties.

While the foregoing describes various embodiments of the disclosure, other and further embodiments of the disclosure may be devised without departing from the basic scope thereof. The invention is not limited to the described embodiments, versions or examples, which are included to enable a person having ordinary skill in the art to make and use the invention when combined with information and knowledge available to the person skilled in the art.

### EXAMPLES

The present invention is further explained in the form of following examples. However, it is to be understood that the following examples are merely illustrative and are not to be taken as limitations upon the scope of the invention.

### (A) Formulations

Different formulations were prepared and their composition as given in Table 1. Formula 3 represents the present invention whereas Formula 1, Formula 2 and Formula 4 are the comparative formulations.

**Table 1: Composition of different formulations.**

| **Ingredients** | **Formula 1 (Comparative)** | **Formula 2 (Comparative)** | **Formula 3 (Present invention)** | **Formula 4 (Comparative)** |
|---|---|---|---|---|
| Epoxy resin | 45 wt.% | 69.75 wt.% | 51.35 wt.% | 46.125 wt.% |
| Curing agent | 15 wt.% | 23.25 wt.% | 17.15 wt.% | 15.375 wt.% |
| Corrosion resistant fillers | 40 wt.% | - | 19 wt.% | 19 wt.% |
| Glass microspheres | - | 7 wt.% | 12 wt.% | 12 wt.% |
| Fluorine-containing dispersant | - | - | 0.5 wt.% | 0.5 wt.% |
| Mica powder | - | - | - | 5 wt.% |
| Rice husk | - | - | - | 2 wt.% |
| Solvent | As per the consistency, approx. 20 wt.% | As per the consistency, approx. 20 wt.% | As per the consistency, approx. 20 wt.% | As per the consistency, approx. 20 wt.% |

### (B) Electrochemical Impedance Spectroscopy (EIS) (ASTM G106):

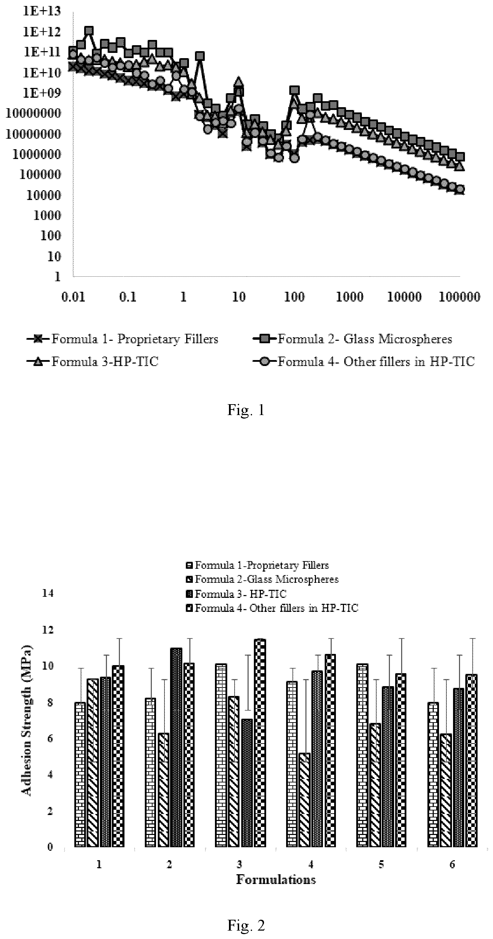

EIS is a technique to measure the permeability or barrier properties of the coating based on the electrical resistance of the coating. The impedance of a coating is related to the nature of the polymer, its density, and its fillers. The method involves immersing the coated sample in 3.5 wt.% NaCl. The medium was chosen because it resembles Sea Water and provides an accelerated corrosive environment. The electrochemical impedance spectra were measured over a range of frequencies ranging from 10⁻² to 10⁵ Hz with a sine perturbation of 10 mV. The EIS results for various coated samples are shown in Figure 1. The impedance values at lower frequencies depict the corrosion resistance and the impedance values at higher frequencies indicate the solution resistance. It is also important to highlight, that at lower frequencies the electrolyte (3.5 wt% NaCl) has sufficient time to interact with the surface.

As seen from these values, all coatings were showing higher impedance values at low and high frequencies. Amongst these four coating formula 2 was showing a higher impedance value than other coating formulations as shown in Table 2. To further evaluate the performance of these coatings for a longer duration, an immersion test in the same environment for 30 days was been performed. This test helps to evaluate the water uptake behavior.

Results showed that Formula 2 was not stable for a longer duration of time as its impedance value decreased. Formula 3 and Formula 4 didn't show any decrease in the impedance value even after 30 days of immersion. Further analysis was carried out to identify the best-suited formulations.

**Table 2: Impedance Value of Bode Plot of different formulation and HP-TIC.**

| **Composition** | **Impedance (Ω) at 10⁻² Hz** | **Impedance (Ω) at 10⁵ Hz** |
|---|---|---|
| Formula 1- (Proprietary Fillers) | 2.00 × 10¹⁰ | 1.72 × 10⁴ |
| Formula 2- (Glass Microspheres) | 1.13 × 10¹¹ | 7.29 × 10⁵ |
| Formula 3- (HP-TIC) | 7.97 × 10¹⁰ | 2.86 × 10⁵ |
| Formula 4- (Other fillers in HP-TIC) | 7.85 × 10¹⁰ | 1.92 × 10⁴ |

### (C) Adhesion Test (ASTM D4541-17):

This method is for evaluating the pull-off strength (commonly referred to as adhesion) of a coating system from metal substrates. This test determines the greatest perpendicular force that a surface area can bear before a plug of material is detached. Also, it determines if the coated surface remains intact on the metal at a defined load. The adhesion test of different formulations is mentioned in Table 3 and Fig 2.

**Table 3: Adhesion Strength of different formulation and HP-TIC.**

| | **Formula 1-Proprietary Fillers (MPa)** | **Formula 2-Glass Microspheres (MPa)** | **Formula 3-HP-TIC (MPa)** | **Formula 4-Other fillers in HP-TIC (MPa)** |
|---|---|---|---|---|
| 1 | 7.96 | 9.25 | 9.36 | 9.99 |
| 2 | 8.19 | 6.28 | 10.95 | 10.16 |
| 3 | 10.11 | 8.32 | 7.06 | 11.42 |
| 4 | 9.12 | 5.17 | 9.72 | 10.6 |
| 5 | 10.08 | 6.8 | 8.85 | 9.57 |
| 6 | 7.99 | 6.23 | 8.74 | 9.5 |
| **Average** | **8.90** | **7.01** | **9.11** | **10.21** |

As seen above, Formula 4 was found to be having the best adhesion strength followed by Formula 3. The failure is cohesive failure indicating excellent adhesion strength to the substrate. The results also showed that Formula 2 was having least adhesion strength among all other coating formulations. These results were corroborated by the results obtained from Electrochemical Impedance Spectroscopy.

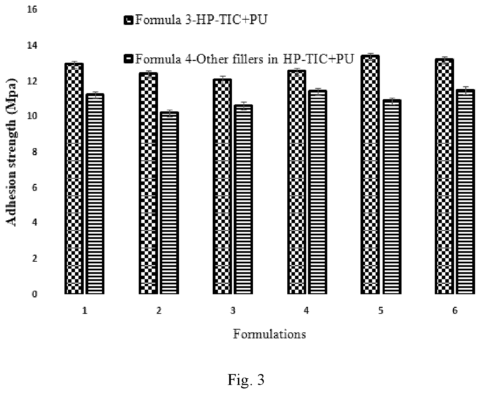

To further evaluate the performance of the coating for a two-coat system, formula 3 and formula 4 were coated with Polyurethane (PU) as a topcoat. The data for two coat system is mentioned in Figure 3 and Table 4. The results revealed that the Formula 3+PU topcoat has excellent adhesion strength followed by formula 4.

**Table 4: Adhesion Strength of HP-TIC and other fillers in HP-TIC with top coat of Polyurethane.**

| | **Formula 3-HP-TIC+PU (MPa)** | **Formula 4-Other fillers in HP-TIC+PU (MPa)** |
|---|---|---|
| 1 | 12.96 | 11.25 |
| 2 | 12.42 | 10.22 |
| 3 | 12.11 | 10.63 |
| 4 | 12.56 | 11.45 |
| 5 | 13.42 | 10.91 |
| 6 | 13.21 | 11.52 |
| **Average** | **12.78** | **10.99** |

To address the corrosion under insulation issues, the present invention discloses Formulation-3. The corrosion resistance and electrochemical impedance of Formulation-3 showed very high impedance value implying its excellent barrier-type corrosion resistance. The adhesion results showed cased that the formulation-3 has excellent adhesion strength and is also compatible with conventional Polyurethane topcoat.

## Claims

1. A composition for mitigating corrosion under insulation, said composition comprising:
(a) 20 wt.% to 60 wt.% of an epoxy resin;
(b) 10 wt.% to 30 wt.% of a curing agent comprising a mixture of
(b1) an aromatic compound selected from the following formula 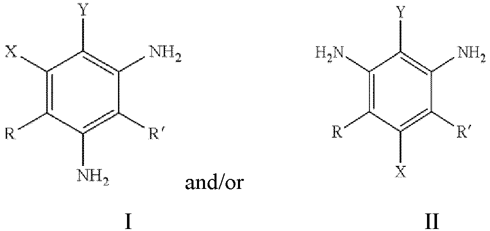 wherein,
Y is an alkyl group containing 1 to 4 carbon atoms,
X is hydrogen or an alkyl group containing 1 to 4 carbon atoms, and
R and R', independent of each other, are selected from alkyl group containing 1 to 4 carbon atoms, and alkylthio group containing 1 to 4 carbon atoms, and
(b2) an aliphatic compound;
(c) 1.0 wt.% to 15 wt.% of glass microspheres;
(d) 10 wt.% to 40 wt.% of corrosion resistant fillers;
(e) 0.1 wt.% to 1.0 wt.% of a fluorine-containing dispersant; and
(f) 10 wt.% to 40 wt.% of a solvent,
wherein the wt.% is based on the total weight of the composition.

2. The composition as claimed in claim 1, wherein the epoxy resin has an epoxy equivalent weight (EEW) ranging between 150 gm/eq to 200 gm/eq, determined according to ASTM D1652.

3. The composition as claimed in claim 1, wherein the aromatic compound is a formula I comprising: 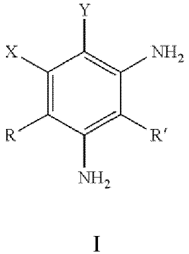 wherein,
Y is an alkyl group containing 1 to 4 carbon atoms,
X is hydrogen or an alkyl group containing 1 to 4 carbon atoms, and
R and R', independent of each other, are selected from alkyl group containing 1 to 4 carbon atoms, and alkylthio group containing 1 to 4 carbon atoms.

4. The composition as claimed in claim 1, wherein the aliphatic compound is selected from the group consisting of ethylene diamine, diethylene diamine, diethylene triamine, triethylene tetramine, propylene diamine, tetraethylene pentamine, hexaethylene heptamine, hexamethylene diamine, 2-methyl-1,5-pentamethylene diamine, isophorone diamine and combination thereof.

5. The composition as claimed in claim 1, wherein the glass microsphere has a Dᵥ₅₀ particle size ranging between 10 µm to 100 µm.

6. The composition as claimed in claim 1, wherein the filler is selected from the group consisting of SiO₂, CaO, Ca₂SiO₄, CaCO₃, TiO₂, Na₂O, MnO₂, K₂O, Al₂O₃, Fe₂O₃, MgO and combinations thereof.

7. The composition as claimed in claim 1, wherein the fluorine-containing dispersant is selected from the group consisting of perfluoroalkylethyl phosphates, perfluoroalkylethyl betaines, fluoroaliphatic amine oxides, fluoroaliphatic sodium sulfosuccinates, fluoroaliphatic stearate esters, fluoroaliphatic phosphate esters, fluoroaliphatic quaternaries, fluoroaliphatic polyoxyethylenes, fluoroalkyl sulfonate, and salts of fluoroalkyl sulfonate.

8. The composition as claimed in claim 1, wherein the solvent is selected from polar solvent, hydrocarbon solvent and combination thereof.

9. A process for preparing the composition for mitigating corrosion under insulation comprising:
i) taking 20 wt.% to 60 wt.% of an epoxy resin;
ii) adding 10 wt.% to 40 wt.% of corrosion resistant fillers to the epoxy resin with stirring for a period in the range of 5 min to 60 min to obtain a first reaction mixture;
iii) adding 0.1 wt.% to 1.0 wt.% of a fluorine-containing dispersant and 1.0 wt.% to 15 wt.% of glass microspheres in the first reaction mixture with stirring for a period in the range of 5 min to 60 min to obtain a second reaction mixture;
iv) adding 10 wt.% to 40 wt.% of a solvent in the second reaction mixture to obtain a third reaction mixture; and
v) adding 10 wt.% to 30 wt.% of a curing agent in the third reaction mixture with stirring for a period in the range of 5 min to 60 min to obtain a composition for mitigating corrosion under insulation.

10. A method for mitigating corrosion under insulation, said method comprising coating on an insulated surface the composition as claimed in one or more of claims 1 to 8 or as obtained according to the process claimed in claim 9.

11. Use of a composition comprising:
(a) 20 wt.% to 60 wt.% of an epoxy resin;
(b) 10wt.% to 30 wt.% of a curing agent comprising a mixture of
(b1) an aromatic compound selected from the following formula 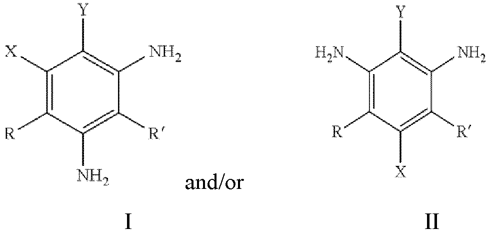 wherein,
Y is an alkyl group containing 1 to 4 carbon atoms,
X is hydrogen or an alkyl group containing 1 to 4 carbon atoms, and
R and R', independent of each other, are selected from alkyl group containing 1 to 4 carbon atoms, and alkylthio group containing 1 to 4 carbon atoms, and
(b2) an aliphatic/cycloaliphatic compound;
(c) 1.0 wt.% to 15 wt.% of glass microspheres;
(d) 10 wt.% to 40 wt.% of corrosion resistant fillers;
(e) 0.1 wt.% to 1.0 wt.% of a fluorine-containing dispersant; and
(f) 10 wt.% to 40 wt.% of a solvent,
wherein the wt.% is based on the total weight of the composition,
as an anticorrosive coating on a metallic surface.
